# EUROPÄISCHE PATENTSCHRIFT

(11) **EP 1 560 019 B1**
(45) Veröffentlichungstag und Bekanntmachung des Hinweises auf die Patenterteilung: **09.01.2008**
(21) Anmeldenummer: 04100299.9
(22) Anmeldetag: 28.01.2004
(51) Int. Cl.: G01N 27/30

(54) **Polymer-Elektrolyt, Halbzelle für elektrochemische Messungen sowie deren Verwendung**
Polymeric electrolyte, half-cell for electrochemical measurements and its use
Electrolyte polymère, demi-cellule pour des mesures électrochimiques et son utilisation

(43) Veröffentlichungstag der Anmeldung: 03.08.2005
(73) Patentinhaber: Mettler-Toledo AG, 8606 Greifensee (CH)
(72) Erfinder: Ehrismann, Philippe, 8610, Uster (CH); Haller, Wolfgang, Chevy Chase, MD Maryland 20815-4557 (US)

(56) Entgegenhaltungen:
- EP-A- 0 859 420
- EP-A- 1 124 132
- EP-B1- 0 615 525
- WO-A-93/11174
- WO-A-97/35350
- US-A- 5 360 529
- US-A1- 2003 183 517

## Beschreibung

### Technisches Gebiet

Die Erfindung betrifft eine Halbzelle, die einen Polymer-Elektrolyten enthält sowie die Verwendung dieser Halbzelle.

### Stand der Technik

Es sind zahlreiche Halbzellen für elektrochemische Messungen, beispielsweise für potentiometrische oder amperometrische Messungen, bekannt. Insbesondere können solche Halbzellen als Bezugselektroden ausgestaltet sein, welche in Kombination mit potentiometrischen oder amperometrischen Sensoren eingesetzt werden. Wesentlich bei solchen Bezugselektroden ist es, dass sie ein möglichst konstantes Referenzpotenzial abgeben.

Bei der einen Art von Bezugselektroden befindet sich im Inneren eines Gehäuses ein flüssiger Bezugselektrolyt, beispielsweise eine wässrige Kaliumchloridlösung, der über eine Flüssigkeitsverbindung (auch "liquid junction" genannt) in Kontakt mit einem flüssigen Messmedium bringbar ist. Zur Vermeidung beziehungsweise Verminderung eines unerwünschten Stoffaustausches zwischen Messmedium und Bezugselektrolyten ist die Flüssigkeitsverbindung üblicherweise als mehr oder weniger poröses Diaphragma ausgestaltet. Ein Nachteil solcher Flüssigkeitsverbindungen besteht allerdings darin, dass eine Verschmutzung oder sogar Verstopfung der Poren auftreten kann, die zu erheblichen Fehlpotenzialen und allenfalls zu Unterbrüchen führen kann.

Bei einer weiteren Art von Bezugselektroden ist anstelle des Diaphragmas eine einzelne Öffnung oder eine Mehrzahl von Öffnungen vorgesehen, wodurch sich das erwähnte Problem der Verschmutzung weitgehend vermeiden lässt. Allerdings bedingt diese Ausgestaltung, dass anstelle der sonst üblichen flüssigen oder gelförmigen Bezugselektrolyten ein nicht fliessfähiger Bezugselektrolyt verwendet wird, um ein Ausfliessen des Bezugselektrolyten zu vermeiden. Insbesondere eignet sich hierfür ein als Hydrogel vorliegender Polymer-Elektrolyt, welcher beispielsweise eine gesättigte wässrige Kaliumchloridlösung und vorzugsweise zusätzlich suspendiertes Kaliumchlorid enthält.

In der EP 1 124 132 A1 ist eine gattungsgemässe Bezugselektrode beschrieben, welche einen Polymer-Elektrolyten beinhaltet, der ein Polymer auf Basis von Monomeren ausgewählt aus N-substituierten Acrylamiden oder/und Methacrylaten enthält. Beispielsweise sind die N-substituierten Acrylamide ausgewählt aus N,N-Dimethylacrylamid, N-(Tris(hydroxymethyl)-N-methylacrylamid, N-Hydroxymethylacrylamid, N-Hydroxyethlyacrylamid, N-Glycerinacrylamid und Kombinationen davon. Ein Nachteil der dort verwendeten Monomere ist, dass die daraus hergestellten Polymer-Elektrolyten eine mangelhafte Beständigkeit gegenüber Säuren und Laugen, eine geringe Hydrolysestabilität sowie eine niedrige Polarität aufweisen.

### Darstellung der Erfindung

Aufgabe der Erfindung ist die Bereitstellung weiterer Polymer-Elektrolyten, welche für elektrochemische Halbzellen, insbesondere für Referenz-Halbzellen, besonders geeignet sind. Insbesondere sollen diese Polymer-Elektrolyten im Vergleich zu den vorbekannten eine höhere Polarität sowie eine verbesserte Hydrolysestabilität aufweisen. Weitere Aufgaben der Erfindung sind die Bereitstellung einer verbesserten Halbzelle sowie die Angabe von Verwendungen der Halbzelle und der Polymer-Elektrolyten.

Gelöst werden diese Aufgaben durch eine Halbzelle, die einen Polymer-Elektrolyten enthält, sowie eine Verwendung dieser Halbzelle gemäss den unabhängigen Ansprüchen.

Die erfindungsgemässe Halbzelle, welche als Komponente in potentiometrischen oder amperometrischen Sensoren verwendbar ist, enthält einen Polymer-Elektrolyten. Des Weiteren ist der erfindungsgemässe Polymer-Elektrolyt als Festphasen-Elektrolyt in einer Batterie-Halbzelle verwendbar.

Die erfindungsgemässen Polymer-Elektrolyten enthalten ein Polymer, welches durch Polymerisation des an sich bekannten N -Acryloylaminoethoxyethanols oder durch Copolymerisation von N-Acryloylaminoethoxyethanol mit mindestens einer weiteren Monomerkomponente herstellbar ist. Die erfindungsgemässen Polymer-Elektrolyten zeichnen sich durch eine gute Resistenz und Stabilität gegenüber Säuren wie auch gegenüber Basen aus. Ausserdem weisen die erfindungsgemässen Polymer-Elektrolyten eine gute Beständigkeit in Wasser wie auch in organischen Lösungsmitteln auf.

Vorteilhafte Ausgestaltungen der Erfindung sind in den abhängigen Ansprüchen definiert.

Als weitere Monomerkomponente kann das Polymer ein Hydroxyalkylmethacrylat enthalten, wobei es sich vorzugsweise um 2-Hydroxyethylmethacrylat und/oder 3-Hydroxypropylmethacrylat handelt. Mit dieser weiteren Monomerkomponente lässt sich auf vorteilhafte Art die Polarität des Polymer-Elektrolyten beeinflussen, wobei durch Wahl des Mengenverhältnisses der weiteren Monomerkomponente zur ersten Monomerkomponenten die Polarität über einen weiten Bereich einstellbar ist.

Die Ausgestaltung, in welcher das Polymer als zusätzliche Monomerkomponente ein silyliertes Alkylmethacrylat enthält, ist besonders vorteilhaft im Zusammenhang mit einer Halbzelle mit einem Glasgehäuse. Dadurch, dass das Polymer als zusätzliche Monomerkomponente ein silyliertes Alkylmethacrylat, vorzugsweise 3-(Trimethoxysilyl)propylmethacrylat, enthält, wird eine Haftung des Polymer-Elektrolyten am Glasgehäuse erreicht, wodurch eine längere Lebensdauer der Halbzelle und insbesondere eine bessere Druck- und Auswaschresistenz erzielt wird.

Der Polymer-Elektrolyt kann zusätzlich eine konzentrierte wässrige Lösung eines Salzes oder Salzgemisches beinhalten, was für den Einsatz in polaren Messmedien angezeigt ist. Weiterhin kann der Polymer-Elektrolyt ein Gemisch eines organischen Lösungsmittels und einer konzentrierten wässrigen Lösung eines Salzes beinhalten und ist dementsprechend vornehmlich für wenig polare Messmedien einsetzbar. Das organische Lösungsmittel ist aus der von Glycerin, Ethylenglykol, Methanol, Ethanol, n-Propanol, Isopropanol, Aceton sowie Mischungen davon gebildeten Gruppe ausgewählt. Besonders vorteilhaft ist es, wenn das Salz zusätzlich als Suspension vorliegt. Durch den erhöhten Salzgehalt wird eine längere Standzeit der Halbzelle gegenüber einem Auswaschen des Salzes aufgrund des Kontaktes mit dem Messmedium erreicht. Andererseits lässt sich die durch das Auswaschen bedingte fortschreitende Verarmung des Salzes ohne weiteres anhand der sich ausbildenden Auswasch- oder Verarmungsfront visuell feststellen, welche die Grenze zwischen einem durch die Salzsuspension getrübten Bereich des Polymer-Elektrolyten und einem infolge der nicht mehr vorhandenen Salzsuspension klareren Bereich des Polymer-Elektrolyten bildet. Beispielsweise ist das besagte Salz aus der von Kaliumchlorid, Natriumchlorid, Lithiumchlorid, Kaliumnitrat, Kaliumperchlorat, Natriumformiat, Lithiumacetat, Lithiumsulfat, Ammoniumchlorid, Methylammoniumchlorid, Dimethylammoniumchlorid, Trimethylammoniumchlorid sowie Mischungen davon gebildeten Gruppe ausgewählt. Das besagte Salz kann aber beispielsweise auch ein weiteres ionisches organisches Halogenid sein. Des Weiteren kann das besagte Salz ein Redox-System bilden.

Die Halbzelle weist eine offene Flüssigkeitsverbindung zwischen dem Polymer-Elektrolyten und einem umgebenden Medium - in der Regel ein Messmedium bzw. eine flüssige Probe - auf. Diese Ausgestaltung ist möglich, weil der Polymer-Elektrolyt im Wesentlichen in fester Form vorliegt und demnach nicht aus der offenen Flüssigkeitsverbindung austreten kann. Durch den Verzicht auf ein Diaphragma lassen sich unerwünschte Störpotenziale im Bereich der Flüssigkeitsverbindung weitgehend vermeiden.

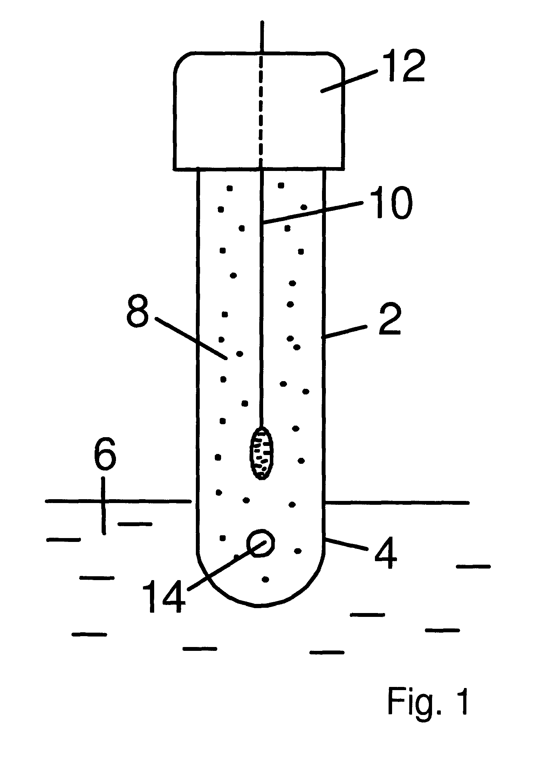

### Kurze Beschreibung der Zeichnung

Die einzige Figur zeigt schematisch eine Bezugselektrode für elektrochemische Messungen, im Längsschnitt.

### Wege zur Ausführung der Erfindung

Die in der Figur dargestellte Bezugselektrode weist ein aus Glas oder Kunststoff gefertigtes rohrförmiges Gehäuse 2 auf, dessen unteres Ende 4 im gezeigten Beispiel in ein Messmedium 6 eingetaucht ist. Der Innenraum des Gehäuses 2 ist mit einem Polymer-Elektrolyten 8 gefüllt, in welchen ein Ableitelement 10 getaucht ist. Das Ableitelement 10 ist beispielsweise durch einen chlorierten Silberdraht gebildet, welcher über ein oberes Abschlussteil 12 des Gehäuses 2 nach aussen geführt ist. Eine Öffnung 14 in der Nähe des unteren Endes 4 dient als Flüssigkeitsverbindung zwischen dem Polymer-Elektrolyten 8 und dem Messmedium 6.

Vorteilhafterweise wird der Polymer-Elektrolyt 8 im Inneren des Gehäuses 2 gebildet, indem zunächst die erforderlichen Edukte, insbesondere die entsprechenden Monomerkomponenten in den Innenraum eingebracht werden und danach eine Polymerisation durchgeführt wird. Bei dieser Reaktion findet eine Verfestigung statt, so dass der gebildete Polymer-Elektrolyt 8 nicht aus der Öffnung 14 austreten kann.

Nebst der in der Figur dargestellten Bezugselektrode sind weitere Ausgestaltungen möglich. Insbesondere kann in an sich bekannter Weise die Bezugselektrode zusammen mit einer Messelektrode, beispielsweise einer pH-Elektrode, zu einer Einstabmesskette kombiniert sein. Es können aber auch andere Arten elektrochemischer Halbzellen mit dem Polymer-Elektrolyten ausgestattet werden, beispielsweise für amperometrische Messungen. Des Weiteren kann der Polymer-Elektrolyt als Festphasen-Elektrolyt in einer Batterie-Halbzelle eingesetzt werden.

Die Herstellung von N-Acryloylaminoethoxyethanol, auch als N-(2-Hydroxyethoxy)-ethylacrylamid bekannt, ist beispielsweise in der EP 0 615 525 B1 beschrieben.

### Ausführungsbeispiele

Die gemäss den folgenden Beispielen hergestellten Polymer-Referenzsysteme zeigen im Vergleich zu herkömmlichen flüssigen Ag/AgCl Referenzhalbzellen sehr stabile Potentiale. Die nur geringen Potentialdifferenzen sind auf eine leicht unterschiedliche Aktivität der Chloridionen zurückzuführen. Aufgrund dieser vorteilhaften Eigenschaften eignen sich die hier beschriebenen Systeme beispielsweise sehr gut als Referenzhalbzellen in potentiometrischen Messketten.

Zur Herstellung von bevorzugten Polymer-Elektrolyten wurden Monomerlösungen mit einer Zusammensetzung gemäss der Tabelle versetzt und unter Kühlung bei 15 bis 20°C homogenisiert. Die so erhaltenen Mischungen wurden in Elektroden mit einem rohrförmigen Glasgehäuse eingefüllt. Durch anschliessende Wärmebehandlung der befüllten Elektroden wurde eine Polymerisation eingeleitet, welche zur Bildung der Polymer-Elektrolyten führte.

In allen Fällen waren die gegenüber üblichen Schliffreferenzen gemessenen elektrochemischen Spannungen kleiner als 4 mV, was prinzipiell auf eine gute Tauglichkeit hinweist. Weitere Eigenschaften der Polymer-Elektrolyten sind nachfolgend zusammengefasst.

**Tabelle: Zusammensetzung (Gewichtsanteile*)**

| **Komponente** | **Bsp.1** | **Bsp. 2** | **Bsp. 3** | **Bsp. 4** |
|---|---|---|---|---|
| N-Acryloylaminoethoxyethanol | 10% | 11% | 9% | 8% |
| Hydroxyethylmethacrylat | 0% | 0% | 2% | 2% |
| Hydroxpropylmethacrylat | 0% | 0% | 0% | 1 % |
| KCl | 10% | 11% | 9% | 9% |
| Glycerin | 32% | 33% | 29% | 29% |
| Kieselsäure | 7% | 0% | 12% | 12% |
| Wasser | 40% | 44% | 37% | 37% |
| 3-(Trimethoxysilyl)propylmethacrylat | 0.2% | 0.0% | 0.0% | 0.0% |
| Methylen-bis-Acrylamid (MBA) | 0.0% | 0.2% | 0.2% | 0.2% |
| Initiator (Ammoniumpersulfat) | 0.0% | 0.0% | 0.4% | 0.4% |

| | | | | |
|---|---|---|---|---|
| * Wegen Rundung der Gewichtsanteile ergibt deren Summe weniger als 100% | | | | |

Beim Polymer-Elektrolyten gemäss Beispiel 1 handelt es sich um ein trübes Gel mit hoher Festigkeit, mit Tendenz zur Quellung in Wasser.

Beim Polymer-Elektrolyten gemäss Beispiel 2 handelt es sich um ein klares Gel, das im Vergleich zum Beispiel 1 eine erhöhte Sprödigkeit aufweist und ebenfalls eine Tendenz zur Quellung in Wasser zeigt.

Beim Polymer-Elektrolyten gemäss Beispiel 3 handelt es sich um ein trübes Gel mit hoher Festigkeit, das im Vergleich zu den Beispielen 1 und 2 eine geringere Polarität aufweist und dadurch weniger Tendenz zur Quellung in Wasser hat.

Der Polymer-Elektrolyt gemäss Beispiel 4 weist ebenfalls eine niedrige Polarität auf.

### Bezugszeichenliste

- 2: Gehäuse
- 4: unteres Ende von 2
- 6: Messmedium
- 8: Polymer-Elektrolyt
- 10: Ableitelement
- 12: oberes Abschlussteil von 2
- 14: Öffnung von 2

## Patentansprüche

1. Halbzelle für elektrochemische Messungen, welche einen Polymer-Elektrolyten (8) enthält, **dadurch gekennzeichnet, dass** der Polymer-Elektrolyt (8) ein Polymer enthält, welches durch Polymerisation von N-Acryloylaminoethoxyethanol oder durch Copolymerisation von N-Acryloylaminoethoxyethanol mit mindestens einer weiteren Monomerkomponente herstellbar ist.

2. Halbzelle nach Anspruch 1, **dadurch gekennzeichnet, dass** das Polymer als weitere Monomerkomponente ein Hydroxyalkylmethacrylat, vorzugsweise 2-Hydroxyethylmethacrylat und/oder 3-Hydroxypropylmethacrylat, enthält.

3. Halbzelle nach Anspruch 1 oder 2, **dadurch gekennzeichnet, dass** das Polymer als zusätzliche Monomerkomponente ein silyliertes Alkylmethacrylat, vorzugsweise 3-(Trimethoxysilyl)propylmethacrylat, enthält.

4. Halbzelle nach einem der Ansprüche 1 bis 3, **dadurch gekennzeichnet, dass** der Polymer-Elektrolyt zusätzlich eine konzentrierte wässrige Lösung eines Salzes oder Salzgemisches beinhaltet.

5. Halbzelle nach einem der Ansprüche 1 bis 4, **dadurch gekennzeichnet, dass** e der Polymer-Elektrolyt zusätzlich ein Gemisch eines organischen Lösungsmittels und einer wässrigen Lösung eines Salzes enthält.

6. Halbzelle nach Anspruch 5, **dadurch gekennzeichnet, dass** das organische Lösungsmittel aus der von Glycerin, Ethylenglykol, Methanol, Ethanol, n-Propanol, Isopropanol, Aceton sowie Mischungen davon gebildeten Gruppe ausgewählt ist.

7. Halbzelle nach einem der Ansprüche 4 bis 6, **dadurch gekennzeichnet, dass** das Salz zusätzlich als Suspension vorliegt.

8. Halbzelle nach einem der Ansprüche 4 bis 7, **dadurch gekennzeichnet, dass** das Salz aus der von Kaliumchlorid, Natriumchlorid, Lithiumchlorid, Kaliumnitrat, Kaliumperchlorat, Natriumformiat, Lithiumacetat, Lithiumsulfat, Ammoniumchlorid, Methylammoniumchlorid, Dimethylammoniumchlorid, Trimethylammoniumchlorid sowie Mischungen davon gebildeten Gruppe ausgewählt ist.

9. Halbzelle nach einem der Ansprüche 1 bis 8, **dadurch gekennzeichnet, dass** eine offene Flüssigkeitsverbindung (14) zwischen dem Polymer-Elektrolyten (8) und einem umgebenden Medium (6) vorgesehen ist.

10. Halbzelle nach einem der Ansprüche 1 bis 9, **dadurch gekennzeichnet, dass** die Halbzelle eine Referenz-Halbzelle ist.

11. Halbzelle nach einem der Ansprüche 1 bis 9, **dadurch gekennzeichnet, dass** die Halbzelle eine Batterie-Halbzelle ist, welche den Polymer-Elektrolyten als Festphasen-Elektrolyt enthält.

12. Verwendung der Halbzelle nach einem der Ansprüche 1 bis 10 als Komponente in potentiometrischen oder amperometrischen Sensoren.

## Claims

1. A half-cell for electrochemical measurements containing a polymer electrolyte (8), **characterized in that** the polymer electrolyte (8) contains a polymer which can be produced through polymerisation of N-acryloylaminoethoxy ethanol or through co-polymerisation of N-acryloylaminoethoxy ethanol with at least one additional monomer component.

2. The half-cell according to Claim 1, **characterized in that** the polymer as further monomer component contains a hydroxyalkyl methacrylate, preferably 2-hydroxyethyl methacrylate and/or 3-hydroxypropyl methacrylate.

3. The half-cell according to Claim 1 or 2,
**characterized in that** the polymer as additional monomer component contains a silylised alkyl methacrylate, preferably 3-(trimethoxysilyl)propyl methacrylate.

4. The half-cell according to any one of the Claims 1 to 3, **characterized in that** the polymer electrolyte additionally contains a concentrated aqueous solution of a salt or salt mixture.

5. The half-cell according to any one of the Claims 1 to 4, **characterized in that** the polymer electrolyte additionally contains a mixture of an organic solvent and an aqueous solution of a salt.

6. The half-cell according to Claim 5, **characterized in that** the organic solvent is selected from the group of glycerine, ethylene glycol, methanol, ethanol, n-propanol, isopropanol, acetone as well as mixtures thereof.

7. The half-cell according to any one of the Claims 4 to 6, **characterized in that** the salt is additionally present as suspension.

8. The half-cell according to any one of the Claims 4 to 7, **characterized in that** the salt is selected from the group of potassium chloride, sodium chloride, lithium chloride, potassium nitrate, potassium perchlorate, sodium formiate, lithium acetate, lithium sulphate, ammonium chloride, methyl ammonium chloride, dimethyl ammonium chloride, trimethyl ammonium chloride as well as mixtures thereof.

9. The half-cell according to any one of the Claims 1 to 8, **characterized in that** an open liquid junction (14) is provided between the polymer electrolyte (8) and a surrounding medium (6).

10. The half-cell according to any one of the Claims 1 to 9, **characterized in that** the half-cell is a reference half-cell.

11. The half-cell according to any one of the Claims 1 to 9, **characterized in that** the half-cell is a battery half-cell which contains the polymer electrolyte as solid-phase electrolyte.

12. A use of the half-cell according to any one of the Claims 1 to 10 as component in potentiometric or amperometric sensors.

## Revendications

1. Demi-cellule pour mesures électrochimiques, qui contient un électrolyte de polymère (8) **caractérisée en ce que** l'électrolyte de polymère (8) contient un polymère qui peut être fabriqué par polymérisation de N-acryloylaminoéthoxyéthanol ou par copolymérisation de N-acryloylaminoéthoxyéthanol avec au moins un autre composant monomère.

2. Demi-cellule selon la revendication 1, **caractérisée en ce que** le polymère contient comme autre composant monomère un hydroxyalkylméthacrylate, de préférence du 2-hydroxyéthyméthacrylate et/ou du 3-hydroxypropylméthacrylate.

3. Demi-cellule selon la revendication 1 ou 2, **caractérisée en ce que** le polymère contient comme composant monomère supplémentaire un alkylméthacrylate silylé, de préférence du 3-(triméthoxysilyl)propylméthacrylate.

4. Demi-cellule selon l'une quelconque des revendications 1 à 3, **caractérisée en ce que** l'électrolyte de polymère contient en supplément une solution aqueuse concentrée d'un sel ou d'un mélange de sel.

5. Demi-cellule selon l'une quelconque des revendications 1 à 4, **caractérisée en ce que** l'électrolyte de polymère contient en supplément un mélange d'un solvant organique et d'une solution aqueuse d'un sel.

6. Demi-cellule selon la revendication 5,
**caractérisée en ce que** le solvant organique est sélectionné dans le groupe formé de glycérine, éthylèneglycol, méthanol, éthanol, n-propanol, isopropanol, acétone et de mélanges de ces produits.

7. Demi-cellule selon l'une quelconque des revendications 4 à 6, **caractérisée en ce que** le sel est présent en supplément comme suspension.

8. Demi-cellule selon l'une quelconque des revendications 4 à 7, **caractérisée en ce que** le sel est choisi dans le groupe formé de chlorure de potassium, chlorure de sodium, chlorure de lithium, nitrate de potassium, perchlorate de potassium, formiate de sodium, acétate de lithium, sulfate de lithium, chlorure d'ammonium, chlorure d'ammonium de méthyle, chlorure d'ammonium de diméthyle, chlorure d'ammonium de triméthyle ainsi que de mélanges de ces produits.

9. Demi-cellule selon l'une quelconque des revendications 1 à 8, **caractérisée en ce qu'**une liaison de liquide (14) ouverte est prévue entre l'électrolyte de polymère (8) et un fluide (6) environnant.

10. Demi-cellule selon l'une quelconque des revendications 1 à 9, **caractérisée en ce que** la demi-cellule est une demi-cellule de référence.

11. Demi-cellule selon l'une quelconque des revendications 1 à 9, **caractérisée en ce que** la demi-cellule est une demi-cellule de batterie, qui contient l'électrolyte polymère comme électrolyte à phase solide.

12. Utilisation de la demi-cellule selon l'une quelconque des revendications 1 à 10 comme composant dans des capteurs potentiométriques ou ampérométriques.
